# DEMANDE DE BREVET EUROPEEN

(11) **EP 4 825 276 A1**
(43) Date de publication de la demande: **21.10.2026**
(21) Numéro de dépôt: 26168472.4
(22) Date de dépôt: 27.03.2026
(51) Int. Cl.: A47J 31/44, A47J 31/60, A47J 31/46

(54) **DISPOSITIF DE DISTRIBUTION D'UNE BOISSON MUNI D'UN SYSTEME AUTONETTOYANT**

(30) Priorité: 18.04.2025 FR 2504182
(71) Demandeur: SEB S.A., 69130 Ecully (FR)
(72) Inventeur: SABATTIER, Johan, 69134 ECULLY CEDEX (FR); MORIN, Gilles, 69134 ECULLY CEDEX (FR); DASSONVILLE, Yohan, 69134 ECULLY CEDEX (FR)
(74) Mandataire: SEB Développement

(57) **Abrégé**

La présente divulgation concerne un appareil de production d'une boisson (35), comprenant :
un dispositif de distribution d'une boisson (17) comprenant :
- un port d'amenée de liquide (27)
- un port d'amenée d'air,
- un port d'amenée d'eau et/ou de vapeur (51),
- une partie de mélange,
- un port de nettoyage (61)

un réservoir d'eau (48),
un système de distribution de fluide (68) positionné entre le réservoir d'eau (48) et le dispositif de distribution de boisson (17), et comprenant un régulateur de débit (49) propre à commander l'alimentation en eau et/ou en vapeur des ports (51, 61) et configuré pour adopter sélectivement :
- une première position dans laquelle le régulateur de débit (49) empêche le passage de fluide vers le port de nettoyage (61) et permet le passage de fluide vers le port d'amenée d'eau et/ou de vapeur (51), et
- une deuxième position dans laquelle le régulateur de débit (49) exerce l'action inverse.

## Description

### DOMAINE TECHNIQUE

La présente divulgation concerne les dispositifs de distribution d'une boisson, dans lesquels un liquide est acheminé vers le dispositif par une conduite amovible insérée dans un port d'entrée du dispositif. Elle trouve notamment application dans les dispositifs distributeurs de café dans lesquels est intégré un système de distribution de lait, la conduite amovible étant alors une conduite d'alimentation en lait.

### ETAT DE LA TECHNIQUE

On connaît des distributeurs de boisson comprenant un dispositif de distribution muni d'un port d'amenée de liquide dans ou sur lequel peut être insérée une conduite d'alimentation en liquide. Le dispositif de distribution peut également comprendre un port d'amenée de vapeur ou d'eau chaude. Par exemple, dans des distributeurs de lait moussé, un port d'amenée de lait dans lequel peut être insérée une conduite d'amenée de lait permet l'injection de lait, ce lait étant ensuite mélangé à la vapeur et/ou à l'eau chaude et également à de l'air dans une chambre de moussage de sorte à produire le lait moussé. Enfin, le dispositif de distribution permet la distribution du lait moussé vers un récipient grâce à une buse de distribution prévue à cet effet.

Le port d'amenée de boisson doit généralement faire l'objet d'un nettoyage plus ou moins régulier. C'est également le cas de la conduite d'amenée de liquide reliée fluidiquement au port d'amenée de liquide, cette conduite étant prévue pour acheminer le liquide vers le port d'amenée de liquide. Dans le cas notable où le port d'amenée de liquide est un port prévu pour l'amenée de lait, si un tel nettoyage n'est pas effectué périodiquement, des protéines de lait peuvent rester sur ce port d'entrée et développer au fil du temps des odeurs incommodantes. Il est donc nécessaire que l'utilisateur désolidarise la conduite et le port d'amenée de liquide et nettoie l'un et l'autre séparément. Or, le rinçage nécessitant une attention particulière, il est fréquent que l'utilisateur effectue ce rinçage de manière inadéquate, ou même oublie d'effectuer ce rinçage.

### EXPOSE

Il existe donc un besoin pour un dispositif permettant un nettoyage adéquat du port d'amenée de liquide ainsi que de la conduite d'amenée de liquide plus efficace et moins difficile que dans les appareils de distribution de boisson de l'art antérieur.

À cet effet, il est proposé un appareil de production d'une boisson, comprenant :
- un dispositif de distribution d'une boisson comprenant :
   ∘ un port d'amenée de liquide configuré pour accueillir une conduite d'amenée de liquide, le port d'amenée de liquide étant configuré pour alimenter un canal d'amenée de liquide,
   ∘ un port d'amenée d'air,
   ∘ un port d'amenée d'eau et/ou de vapeur,
   ∘ une partie de mélange, le port d'amenée de liquide, le port d'amenée d'air et le port d'amenée d'eau et/ou de vapeur étant fluidiquement reliés à la partie de mélange, et
   ∘ un port de nettoyage comprenant une première extrémité débouchant sur une surface interne du canal d'amenée de liquide,
- un réservoir d'eau,
- un système de distribution de fluide positionné entre le réservoir d'eau et le dispositif de distribution de boisson, le système de distribution de fluide comprenant :
   ∘ un régulateur de débit propre à commander l'alimentation en eau et/ou en vapeur du port de nettoyage et du port d'amenée d'eau et/ou de vapeur, le régulateur de débit étant configuré pour adopter sélectivement :
      ▪ une première position dans laquelle le régulateur de débit empêche le passage de fluide vers le port de nettoyage et permet le passage de fluide vers le port d'amenée d'eau et/ou de vapeur, et
      ▪ une deuxième position dans laquelle le régulateur de débit empêche le passage de fluide vers le port d'amenée d'eau et/ou de vapeur et permet le passage de fluide dans le port de nettoyage.

La présence d'un port de nettoyage distinct des autres ports du dispositif et débouchant dans le port d'amenée de liquide permet l'acheminement d'un fluide de nettoyage dans le port d'amenée de liquide. La présence du régulateur de débit permet de garantir que, lorsqu'il est procédé à un rinçage du port d'amenée de liquide, aucun fluide ne s'écoule dans le port d'amenée d'eau chaude et/ou de vapeur, ce qui pourrait modifier la pression du fluide circulant dans le port d'amenée de liquide et ainsi compromettre la qualité du nettoyage du port d'amenée de liquide.

Selon certaines variantes de réalisation, l'appareil de production de boisson comprend en outre une vanne de fermeture agencée en amont du régulateur de débit selon un sens normal d'écoulement du fluide dans le système de distribution de fluide, la vanne de fermeture étant configurée pour adopter sélectivement une position d'ouverture dans laquelle la vanne de fermeture permet le passage du fluide vers le régulateur de débit, ou une position de fermeture dans laquelle la vanne de fermeture empêche le passage du fluide vers le régulateur de débit.

Selon certaines variantes de réalisation, la vanne de fermeture est configurée pour adopter la position de fermeture si une pression du fluide subie par la vanne de fermeture est inférieure à un seuil prédéfini.

Selon certaines variantes de réalisation, l'appareil de production d'une boisson comprend en outre un moyen de sélection d'un débit d'air à travers le port d'amenée d'air, le moyen de sélection étant positionné sur le dispositif de distribution et étant actionnable manuellement.

Selon certaines variantes de réalisation, la partie de mélange comprend :
∘ un conduit d'écoulement principal relié fluidiquement au port d'amenée d'eau et/ou de vapeur et comportant une restriction de section, une première portion de conduit du conduit d'écoulement principal étant située en amont de la restriction de section et s'étendant jusqu'à la restriction de section, et une deuxième portion de conduit du conduit d'écoulement principal étant située en aval de la restriction de section et s'étendant depuis la restriction de section, la deuxième portion de conduit formant une chambre de traitement, et
∘ une chambre de mélange située en aval de la chambre de traitement, la chambre de mélange étant munie d'un orifice de sortie de la boisson.

Selon certaines variantes de réalisation, la chambre de traitement est une chambre de moussage et la boisson est une boisson moussée.

Selon certaines variantes de réalisation, la partie de mélange comprend :
o un canal d'amenée d'eau /vapeur s'étendant entre le port d'amenée d'eau et/ou de vapeur et la première portion de conduit,
∘ le canal d'amenée de liquide s'étendant entre le port d'amenée de liquide et le conduit d'écoulement principal, et
∘ un canal d'amenée d'air s'étendant entre le port d'amenée d'air et le conduit d'écoulement principal.

Selon certaines variantes de réalisation, le canal d'amenée d'air et le canal d'amenée de liquide débouchent dans le conduit d'écoulement principal au niveau de la restriction de section, de préférence directement en aval de la restriction de section au niveau d'une extrémité amont de la deuxième portion de conduit.

Selon certaines variantes de réalisation, le système de distribution de fluide comprend en amont du régulateur de débit selon un sens normal d'écoulement du liquide depuis le réservoir d'eau :
- une pompe, et
- un élément chauffant configuré pour chauffer le fluide.

Selon certaines variantes de réalisation, l'appareil de production de boisson comprend en outre un port d'amenée de boisson chaude et une buse de distribution de boisson chaude, le port d'amenée de boisson chaude étant relié fluidiquement à la buse de distribution de boisson chaude.

Selon certaines variantes de réalisation, le système de distribution de fluide comprend un organe de contrôle du régulateur de débit, l'organe de contrôle étant propre dans un mode de nettoyage du dispositif de distribution de boisson à commander alternativement et de préférence de manière répétée le régulateur de débit entre la première position et la deuxième position.

Selon certaines variantes de réalisation, le dispositif de distribution de boisson est agencé de manière amovible dans une tête de distribution de boisson de l'appareil de production de boisson, la tête de distribution de boisson comprenant deux sorties d'eau et/ou de vapeur auxquelles le port d'amenée d'eau et/ou de vapeur et le port de nettoyage sont respectivement propres à être connectés, l'appareil de production de boisson comprenant deux canaux de circulation d'eau et/ou de vapeur reliés entre, d'une part, le régulateur de débit et, d'autre part, les sorties d'eau et/ou de vapeur.

Selon certaines variantes de réalisation, le canal d'amenée de liquide comprend :
- une première portion disposée sensiblement verticalement dans une position d'utilisation de l'appareil de production d'une boisson, et
- une deuxième portion, disposée sensiblement horizontalement dans une position d'utilisation de l'appareil de production d'une boisson et reliée au port d'amenée de liquide, la deuxième portion débouchant sur la première portion.

Selon certaines variantes de réalisation, la surface interne du canal d'amenée de liquide comprend un orifice d'évacuation fluidiquement relié à une buse d'évacuation, l'orifice d'évacuation étant ménagé à travers la surface interne du canal d'amenée de liquide de sorte à permettre une évacuation de liquide hors du canal d'amenée de liquide sous l'effet de la gravité lorsque la conduite d'amenée de liquide n'est pas insérée dans le port d'amenée de liquide, l'orifice d'évacuation étant configuré pour être obturé par la conduite d'amenée de liquide lorsque la conduite d'amenée de liquide est insérée dans le port d'amenée de liquide.

Selon certaines variantes de réalisation, lorsque la vanne de fermeture est dans sa position de fermeture, la vanne de fermeture empêche en outre tout passage d'un fluide à travers la vanne de fermeture.

Selon certaines variantes de réalisation, le port d'amenée d'eau chaude et/ou de vapeur est agencé au-dessus du port de nettoyage en configuration d'utilisation de l'appareil Selon certaines variantes de réalisation, le port d'amenée d'eau chaude et/ou de vapeur et le port de nettoyage débouchent dans une face arrière du dispositif de distribution de boisson et sont de préférence en saillie de cette face arrière.

Selon certaines variantes de réalisation, le port d'amenée de liquide débouche dans une face latérale du dispositif de distribution de boisson moussée et est de préférence en saillie de cette face latérale

Selon certaines variantes de réalisation, le moyen de sélection du débit d'air est agencé sur une face supérieure du dispositif de distribution de boisson

Selon certaines variantes de réalisation, l'appareil de production d'une boisson comprend en outre un plateau d'accueil d'un récipient, le plateau d'accueil comprenant une portion d'accueil de liquide configurée pour pouvoir accueillir une extrémité de la conduite d'amenée de liquide non reliée au port d'amenée de liquide lors d'un nettoyage du port d'amenée de liquide au moyen du port de nettoyage.

Selon certaines variantes de réalisation, le port d'amenée de liquide est configuré pour accueillir une conduite d'amenée de lait, de préférence amovible par rapport au port d'amenée de liquide.

Selon certaines variantes de réalisation, le port d'amenée de boisson chaude et la buse de distribution de boisson chaude sont distincts du dispositif de distribution.

Selon certaines variantes de réalisation, le port d'amenée d'air est distinct du port de nettoyage

Selon certaines variantes de réalisation, le régulateur de débit est une vanne de distribution de fluide.

Selon certaines variantes de réalisation, le port de nettoyage est un port dédié au nettoyage du dispositif de distribution de boisson avec de l'eau et/ou de la vapeur. Le port de nettoyage est dépourvu d'autre fonction et notamment d'une fonction d'alimentation en air du liquide et/ou du dispositif de distribution de boisson.

Selon certaines variantes de réalisation, le dispositif de distribution de boisson comprend un corps principal qui forme un ensemble propre à être saisi d'un seul tenant par un utilisateur et intègre le port de nettoyage, le port d'amenée de liquide, le port d'amenée d'air et le port d'amenée d'eau et/ou de vapeur, ainsi que la partie de mélange.

Selon certaines variantes de réalisation, le port de nettoyage, le port d'amenée de liquide et le canal d'amenée de liquide sont configurés pour que de l'eau de nettoyage alimentant le port de nettoyage circule via le canal d'amenée de liquide d'une part vers la partie de mélange et de préférence jusqu'à la partie de mélange, et d'autre part vers la conduite d'amenée de liquide et de préférence au travers de la conduite d'amenée de liquide lorsque celle-ci est couplée au port d'amenée de liquide.

La présente divulgation porte, selon un autre aspect, sur un procédé de nettoyage d'un canal d'amenée de liquide d'un dispositif de distribution d'une boisson associé à un appareil de production d'une boisson, le dispositif de distribution de boisson comprenant :
- un port d'amenée de liquide configuré pour accueillir une conduite d'amenée de liquide, le port d'amenée de liquide étant configuré pour alimenter le canal d'amenée de liquide,
- un port d'amenée d'air,
- un port d'amenée d'eau et/ou de vapeur, et
- une partie de mélange, le port d'amenée de liquide, le port d'amenée d'air et le port d'amenée d'eau et/ou de vapeur étant fluidiquement reliés à la partie de mélange,
- un port de nettoyage comprenant une première extrémité débouchant sur une surface interne du canal d'amenée de liquide,

le procédé comprenant des étapes successives de :
a. passage d'un régulateur de débit d'un système de distribution de fluide de l'appareil de production de boisson d'une première position dans laquelle le régulateur de débit empêche le passage de fluide vers le port de nettoyage et permet le passage de fluide vers le port d' amenée d'eau et/ou de vapeur à une deuxième position dans laquelle le régulateur de débit empêche le passage de fluide vers le port d'amenée d'eau et/ou de vapeur et permet le passage de fluide dans le port de nettoyage, et
b. passage d'un fluide provenant d'un réservoir d'eau à travers le système de distribution de fluide et à travers le port de nettoyage du dispositif de distribution de boisson.

### DESCRIPTION DES FIGURES

D'autres caractéristiques, buts et avantages ressortiront de la description qui suit, qui est purement illustrative et non limitative, et qui doit être lue en regard des dessins annexés sur lesquels :
[Fig. 1] illustre schématiquement un appareil de production d'une boisson.
[Fig. 2a] illustre schématiquement un dispositif de distribution d'une boisson pouvant être utilisé au sein de l'appareil de production de boisson, dans une position insérée dans un tête de distribution de l'appareil de production de boisson.
[Fig. 2b] illustre schématiquement le dispositif de distribution d'une boisson de la figure 2a.
[Fig. 2c] illustre schématiquement le dispositif de distribution d'une boisson de la figure 2a, inséré dans la tête de distribution, selon une vue alternative.
[Fig. 2d] illustre schématiquement le dispositif de distribution d'une boisson de la figure 2a, inséré dans la tête de distribution, selon une vue alternative.
[Fig. 3a] illustre schématiquement l'agencement d'un système de distribution de fluide du dans l'appareil de production de boisson, selon un premier mode de réalisation.
[Fig. 3b] illustre schématiquement l'agencement du système de distribution de fluide du dans l'appareil de production de boisson, selon un deuxième mode de réalisation.

Sur l'ensemble des figures, les mêmes éléments ou des éléments similaires sont désignés par des références identiques.

### DESCRIPTION DÉTAILLÉE DE MODES DE RÉALISATION

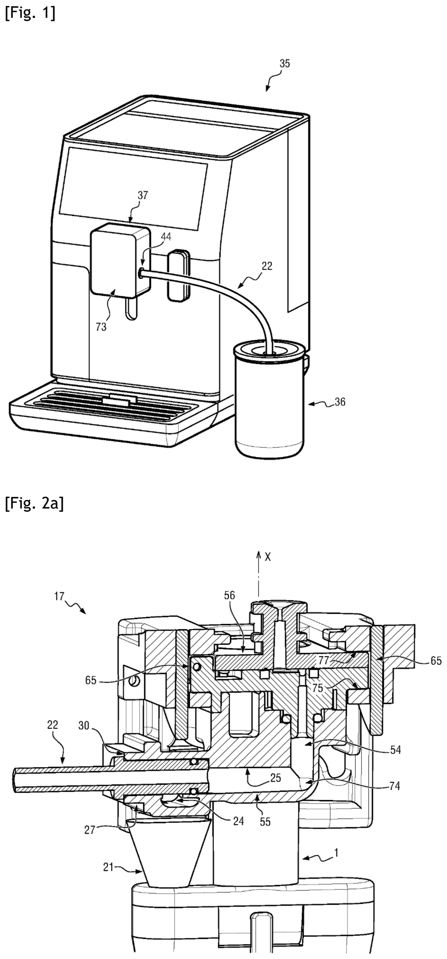

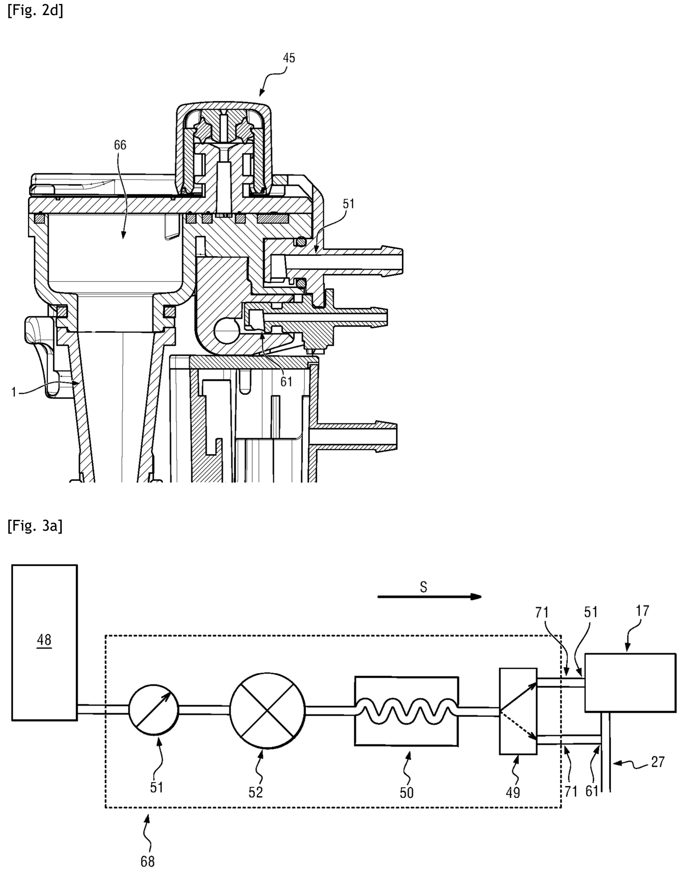

Un appareil de production 35 d'une boisson, illustré à titre d'exemple sur la figure 1, comprend une tête de distribution 37. La tête de distribution 37 est prévue pour accueillir, dans un logement prévu à cet effet, un dispositif de distribution de boisson 17, illustré notamment sur les figures 2a à 2d. De préférence, le dispositif de distribution 17 est accueilli dans la tête de distribution 37 de manière amovible.

L'appareil de production 35 est notamment un appareil de production de café. Dans ce mode de réalisation, la tête de distribution 37 comprend au moins une buse de distribution de café vers un récipient.

L'appareil de production 35 comprend également une première sortie de distribution d'eau/vapeur 47 qui débouche avantageusement dans la tête de distribution 37.

Avantageusement, l'appareil de production 35 comprend également une deuxième sortie de distribution d'eau/vapeur 46 qui débouche avantageusement également dans la tête de distribution 37.

En variante, la première sortie de distribution d'eau et/ou de vapeur 47 et la deuxième sortie de distribution d'eau/vapeur 46 débouchent sur une face avant de l'appareil de production à l'écart de la tête de distribution 37.

Le dispositif de distribution de boisson 17 comprend un corps principal 62.

Le dispositif de distribution de boisson comprend une sortie de boisson, prévue pour acheminer une boisson depuis un orifice de sortie d'une chambre de mélange 66 dans laquelle la boisson est mélangée vers un insert de distribution 1. La chambre de mélange 66 elle-même est de préférence reliée fluidiquement à une chambre de traitement 16 destinée à permettre un traitement d'un liquide non traité de sorte à obtenir la boisson.

La chambre de traitement 16 est directement en amont de la chambre de mélange 66 selon un sens normal d'écoulement du liquide. La chambre de mélange 66 ainsi que la chambre de traitement 16 font toutes deux partie d'une partie de mélange du dispositif de distribution de boisson 17.

L'insert de distribution 1 est fixé à la sortie de boisson du dispositif de distribution de boisson 17, de préférence de manière amovible de sorte à permettre un nettoyage plus aisé de l'insert de distribution 1 et du dispositif de distribution 17, indépendamment l'un de l'autre. Toutefois, selon certains modes de réalisation, l'insert de distribution 1 est solidaire du dispositif de distribution 17.

L'axe X définit une direction de hauteur du dispositif de distribution de boisson 17 et, plus généralement, de l'appareil de production de boisson 35, ainsi que de l'insert de distribution 1, cet axe X étant disposé verticalement dans la position normale d'utilisation du dispositif de distribution de boisson 17.

Selon certains modes de réalisation, la chambre de traitement 16 peut être une chambre de moussage, le liquide non moussé étant moussé dans la chambre de traitement 16 avant de rejoindre la chambre de mélange 66 pour y être mélangé, et donc homogénéisé, puis de s'écouler à travers la sortie de boisson, sous la forme d'une boisson moussée. Le liquide s'écoule ensuite dans l'insert de distribution 1 afin d'être distribué dans un récipient placé en dessous de la tête de distribution 37.

La chambre de traitement 16 est alimentée par un canal d'amenée de liquide 74, alimenté lui-même par un port d'amenée de liquide 27 du dispositif de distribution de boisson 17. Le canal d'amenée de liquide 74 débouche sur une sortie dans une face principale 60 du corps principal 62 du distributeur de boisson 17.

La chambre de traitement 16 est également ouverte sur la face principale 60.

La chambre de traitement 16 est en outre alimentée par un canal d'amenée d'eau et/ou vapeur alimenté par un port d'amenée de d'eau et/ou de vapeur 51 du dispositif de distribution 17. Le port d'amenée d'eau et/ou de vapeur 51 est préférentiellement un port d'amenée de vapeur ou d'eau chaude et en variante un port d'amenée de vapeur ou d'eau chaude ou froide.

La fixation du dispositif de distribution 17 à l'appareil de production de boisson 35 peut être assurée, au moins partiellement, par le biais d'une fixation/connexion du port d'amenée d'eau et/ou de vapeur 51 sur la première sortie d'eau et/ou de vapeur 47 de l'appareil de production 35Le canal d'amenée de liquide 74 présente une surface interne 25.

Le canal d'amenée de liquide 74 comprend, selon certains modes de réalisation, une première portion 54 sensiblement verticale lorsque le dispositif de distribution 17 est dans sa position normale d'utilisation. La première portion 54 est reliée fluidiquement à la partie de mélange du dispositif de distribution 17. Une deuxième portion 55 du canal d'amenée de liquide, sensiblement horizontale dans la position normale d'utilisation du dispositif de distribution 17, est reliée au port d'amenée de liquide 27 à sa première extrémité et à la première portion 54 à sa deuxième extrémité.

Le port d'amenée de liquide 27 peut quant à lui être relié par le biais d'une conduite d'amenée de liquide 22 à un réservoir 36 configuré pour accueillir un liquide non moussé, tel que du lait voire du café, qui est destiné à être moussé dans la chambre de traitement 16. La tête de distribution 37 comprend un orifice de passage 44 destiné à permettre le passage de la conduite d'amenée de liquide 22 dans la tête de distribution 37, afin qu'elle puisse être reliée au port d'amenée de liquide 27 du dispositif de distribution de liquide 17.

De préférence, la conduite d'amenée de liquide 22 est amovible par rapport au port d'amenée de liquide 27.

Le dispositif de distribution 17 comprend en outre un port d'amenée d'air alimentant un canal d'amenée d'air, ce canal débouchant sur une sortie 31 située en amont de la chambre de traitement 16.

Dans le cas où la chambre de traitement 16 est une chambre de moussage, le canal d'amenée d'eau et/ou de vapeur alimente un conduit d'écoulement principal qui comprend une restriction de section 67, la sortie 31 du canal d'amenée d'air et la sortie du canal d'amenée de liquide débouchant toutes deux directement en aval de la restriction de section 67, à une extrémité amont de la deuxième portion de conduit formant la chambre de traitement 16.

Notamment, le conduit d'écoulement principal comprend une première portion de conduit 70 située en amont de la restriction de section 67 selon le sens normal d'écoulement de l'eau et/ou de la vapeur, ainsi qu'une deuxième portion de conduit située en aval de la restriction de section 67. La deuxième portion de conduit définit ainsi la chambre de traitement 16 dans laquelle sont mélangés l'eau chaude/vapeur, le liquide et l'air avant leur entrée dans la chambre de mélange 66.

Par exemple, dans une position d'utilisation du dispositif de distribution 17, la sortie 31 du port d'amenée d'air débouche latéralement dans le conduit d'écoulement principal, tandis que le canal d'amenée de liquide débouche verticalement, par-dessous, dans le conduit principal, en aval de la restriction de section 67.

La restriction de section 67 permet une aspiration du liquide et de l'air afin de permettre leur mélange avec l'eau et/ou vapeur dans la chambre de traitement 16 de sorte à produire un liquide moussé.

Puis, un canal de sortie 69 de la chambre de traitement 16 débouche dans la chambre de mélange 66 selon une trajectoire tangentielle, de sorte à permettre un mélange additionnel du liquide moussé et donc une homogénéisation de celui-ci dans la chambre de mélange 66.

La chambre de traitement 16 peut, non limitativement, être une chambre de moussage de lait et cacao, de lait et chocolat en poudre, de lait et sirop, ou encore de café et cacao.

Le port d'amenée de liquide 27 peut déboucher sur une face latérale du dispositif de distribution de boisson 17. De préférence, il débouche sur une face distincte d'une face dite face « arrière » 72 du dispositif de distribution 17, la face arrière 72 formant, dans la position normale d'utilisation du dispositif de distribution 17, une autre face latérale du dispositif de distribution. Lorsque le dispositif de distribution 17 est monté dans la tête de distribution, la face latérale arrière 72 se trouve d'un côté du dispositif de distribution 17 à une face dite « avant » se trouvant au contact d'une face avant 73 de la tête de distribution 37, cette face avant 73 étant configurée pour faire face à l'utilisateur lorsqu'il utilise l'appareil de production de boisson 35.

Le port d'amenée de liquide 27 est de préférence en saillie d'une face latérale du dispositif de distribution 17 distincte de la face arrière 72.

La sortie du canal d'amenée de liquide est de préférence située à une position verticale plus élevée, dans la position normale d'utilisation du dispositif de distribution de boisson 17, que l'entrée 30 du port d'amenée de liquide 27, de sorte à éviter, du fait de la gravité, l'écoulement intempestif de liquide à travers le canal d'amenée de liquide 74 puis dans le conduit d'écoulement principal en l'absence de la dépression causée par l'arrivée d'eau et/ou vapeur depuis le port d'amenée d'eau et/ou vapeur 51.

L'appareil de production de boisson 35 comprend en outre, selon certaines variantes, un port d'amenée de boisson chaude 3, 'débouchant dans la tête de distribution 37 et permettant l'acheminement d'une boisson additionnelle, indépendamment de la boisson s'écoulant depuis la chambre de mélange 66, vers une buse de distribution indépendante de celle permettant la distribution de la boisson s'écoulant depuis la chambre de mélange 66.

Par exemple, le port d'amenée de boisson chaude 3 et la buse de distribution à laquelle il est relié sont indépendants du dispositif de distribution de boisson 17.

Le port d'amenée de boisson chaude 3 est notamment configuré pour recevoir du café.

### Port de nettoyage et système de distribution de fluide

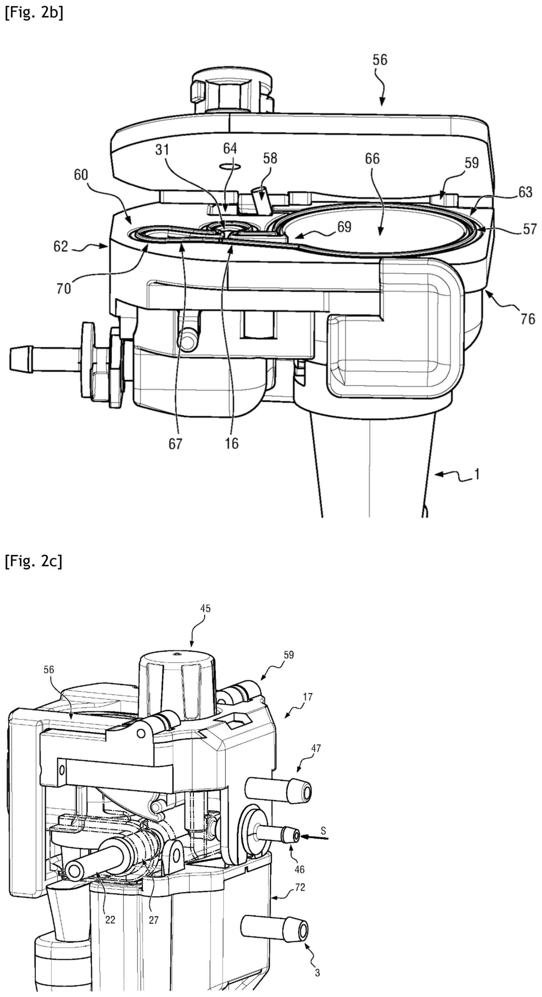

Tel qu'illustré à titre exemplatif sur la figure 2c, le dispositif de distribution de boisson 17 comprend un port de nettoyage 61 muni d'une extrémité débouchant sur la surface interne 25 du canal d'amenée de liquide 74. Le port de nettoyage 61 configuré pour permettre le passage d'un fluide de nettoyage, notamment de l'eau chaude, dans le canal d'amenée de liquide 74 de sorte à permettre un nettoyage efficace du canal d'amenée de liquide 74 et du port d'amenée de liquide 27.

Le port de nettoyage 61 est configuré pour être fixé/connecté sur la deuxième sortie d'eau et/ou de vapeur 46 de l'appareil de production 35.

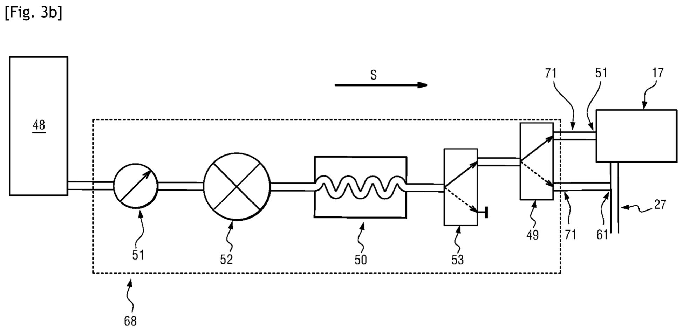

Le port de nettoyage 61 et le port d'amenée d'eau et/ou de vapeur 51 sont configurés pour être fluidiquement reliés à un système de distribution de fluide 68 illustré notamment sur les figures 3a et 3b lorsqu'ils sont connectés respectivement à la deuxième sortie d'eau et/ou de vapeur 46 et à la première sortie d'eau et/ou de vapeur 47.

Le port de nettoyage 61 et le port d'amenée d'eau et/ou de vapeur 51 permettent, à eux deux, un nettoyage de l'ensemble des ports et canaux du dispositif de distribution 17 : le port d'amenée d'eau et/ou de vapeur 51 permet le nettoyage du conduit principal et des chambres de traitement 16 et de mélange 66, tandis que le passage d'eau dans le port de nettoyage 61 permet le nettoyage du port d'amenée de liquide 27, et éventuellement de la conduite d'amenée de liquide 22 lorsque celle-ci est couplée au port d'amenée de liquide 27.

Le système de distribution de fluide 68 comprend un régulateur de débit 49 relié fluidiquement, et de manière indépendante, d'une à la première sortie d'eau et/ou de vapeur 47 et, d'autre part, à la deuxième sortie d'eau et/ou de vapeur 46. Le régulateur de débit est configuré pour pouvoir se déplacer entre deux positions :
- une première position, dans laquelle le régulateur de débit 49 empêche un passage de fluide vers la deuxième sortie d'eau et/ou de vapeur 46 et donc le port de nettoyage 61 et dans laquelle le régulateur de débit 49 permet le passage du fluide vers la première sortie d'eau et/ou de vapeur 47 et donc le port d'amenée d'eau et/ou vapeur 51, et
- une deuxième position, dans laquelle le régulateur de débit permet le passage du fluide vers la deuxième sortie d'eau et/ou de vapeur 46 et donc le port de nettoyage 61 et empêche le passage du fluide vers la première sortie d'eau et/ou de vapeur 47 et donc le port d'amenée d'eau et/ou vapeur 51.

Le régulateur de débit 49 est notamment une vanne, telle qu'une électrovanne.

Afin de permettre son alimentation en fluide, le système de distribution de fluide 68 est raccordé fluidiquement à un réservoir 48 de fluide, le réservoir 48 étant situé en amont du système de distribution de fluide 68 selon un sens normal S d'écoulement du fluide vers le port d'amenée de liquide 27 via la deuxième sortie d'eau et/ou de vapeur 46 et le port de nettoyage 61, ou vers le port d'amenée d'eau chaude et/ou de vapeur 51 via la première sortie d'eau et/ou de vapeur 47 selon la position dans laquelle se trouve le régulateur de débit 49.

Avantageusement le réservoir 48 est le réservoir d'eau de l'appareil de production de boisson 35 qui permet également d'alimenter en eau l'appareil 35 pour réaliser du café.

Le système de distribution de fluide 68 et plus particulièrement le régulateur de débit 49 permettent un nettoyage efficace du canal d'amenée de liquide sans pour autant qu'il soit nécessaire de prévoir une source de fluide indépendante de celle utilisée pour alimenter le port d'amenée d'eau chaude et/ou vapeur 51, et notamment sans qu'il soit nécessaire à l'utilisateur de raccorder un réservoir au port d'amenée de liquide 27 en prévision d'un nettoyage du canal d'amenée de liquide. En outre, le canal d'amenée de liquide peut être nettoyé régulièrement sans qu'il soit nécessaire de désassembler le dispositif de distribution 17.

Notamment, pour les modes de réalisation dans lesquels le port d'amenée de liquide 27 est configuré pour recevoir du lait, le régulateur de débit 49 permet avantageusement le nettoyage de l'ensemble des portions du dispositif de distribution 17 ayant été en contact avec du lait, et donc susceptibles d'être bloquées ou au moins partiellement obturées par la présence de lait séché. En effet, le régulateur de débit 49 permet, dans sa première position, un nettoyage de la partie de mélange comprenant la chambre de traitement 16 et la chambre de mélange 66 via la première sortie d'eau et/ou de vapeur 47 et le port d'amenée d'eau chaude et/ou vapeur 51 - la chambre de traitement 16 et la chambre de mélange 66 étant toutes deux amenées à être en contact avec du lait. Le régulateur de débit 49 permet en outre, dans sa deuxième position, le nettoyage du port d'amenée de liquide 27 et du canal d'amenée de liquide 74 via la deuxième sortie d'eau et/ou de vapeur 46 et le port de nettoyage 61, le port d'amenée de liquide 27 et le canal d'amenée de liquide 74 étant eux aussi susceptibles d'être obturés par du lait séché en l'absence d'un nettoyage régulier.

Selon certains modes de réalisation, le port d'amenée d'eau chaude et/ou de vapeur 51 est agencé au-dessus du port de nettoyage 61 dans la position d'utilisation du dispositif de distribution 17. Ceci diminue le risque que, lors d'un nettoyage du canal d'amenée de liquide grâce au port de nettoyage 61, du fluide traversant le port de nettoyage 61 n'entre involontairement dans le conduit d'amenée d'eau et/ou vapeur, et/ou dans d'autres conduits fluidiquement reliés à celui-ci, sous l'effet de la gravité. Le nettoyage opéré grâce au port de nettoyage 61 reste ainsi confiné autant que possible au port d'amenée de liquide 27 et au canal d'amenée de liquide 74.

Le port de nettoyage 61 et le port d'amenée d'eau chaude et/ou de vapeur 51 peuvent tous deux déboucher sur la face arrière 72 du dispositif de distribution 17.

De préférence, le port de nettoyage 61 et le port d'amenée d'eau chaude et/ou de vapeur 51 s'étendent tous deux en saillie de la face arrière 72.

Préférentiellement, le fluide contenu dans le réservoir 48 est de l'eau. Le système de distribution de fluide 68 comprend un élément chauffant 50 situé entre le réservoir 48 et le régulateur de débit 49, cet élément chauffant 50 étant configuré pour chauffer l'eau provenant du réservoir 48 avant son arrivée dans le régulateur de débit 49.

La présence du régulateur de débit 49 est avantageuse dans ce contexte : en l'absence du régulateur de débit 49, un nettoyage de la partie de mélange pourrait éventuellement être effectué via le port d'amenée d'eau chaude et/ou de vapeur 51. Toutefois, une fois ce nettoyage terminé, la vapeur transmise au port d'amenée d'eau chaude et/ou de vapeur 51 par le système de distribution de fluide 68, issue du chauffage de l'eau provenant du réservoir 48 par l'élément chauffant 50, pourrait causer un fonctionnement non voulu de la partie de mélange. Au contraire, le régulateur de débit 49 permet de rediriger, après un tel nettoyage, le flux d'eau vers le port de nettoyage 61 et d'empêcher tout passage de vapeur vers le port d'amenée d'eau et/ou de vapeur 51, et ainsi tout réamorçage intempestif de la partie de mélange.

En outre, comme on le verra par la suite, il est possible qu'un utilisateur soit amené à placer une extrémité de la conduite d'amenée de liquide 22, opposée à l'extrémité raccordée au port d'amenée de liquide 27, dans un récipient de sorte à permettre l'évacuation du fluide de nettoyage lors d'un nettoyage du canal d'amenée de liquide. Dans ce cas, le régulateur de débit 49 empêche une remontée non souhaitable de liquide dans le dispositif de distribution 17 via la conduite d'amenée de liquide 27, qui pourrait, en l'absence du régulateur de débit 49, avoir lieu par aspiration lorsque de la vapeur résiduelle circule à travers le canal d'amenée d'eau et/ou de vapeur.

L'appareil de production de boisson 35 comprend deux canaux de circulation d'eau chaude et/ou de vapeur 71, chaque canal de circulation 71 se trouvant en aval du régulateur de débit 49 selon le sens normal d'écoulement S dans le dispositif de distribution de fluide 68, et chaque canal de circulation 71 étant relié fluidiquement au régulateur de débit 49. Un des deux canaux de circulation 71 est relié, en aval dudit canal de circulation 71, au port d'amenée d'eau chaude et/ou vapeur 51 via la première sortie d'eau et/ou de vapeur 47, tandis que l'autre des deux canaux 71 est relié, en aval de celui-ci, au port de nettoyage 61 via la deuxième sortie d'eau et/ou de vapeur 46.

Le système de distribution de fluide 68 comprend en outre, selon certaines variantes, une pompe 52 apte à forcer le passage du fluide du réservoir 48 vers l'élément chauffant 50 et vers le régulateur de débit 49.

Selon un mode de réalisation spécifique illustré notamment sur la figure 3b, le système de distribution de fluide 68 comprend, en amont du régulateur de débit 49 selon le sens normal de circulation S, une vanne de fermeture 53 propre à sélectivement permettre ou empêcher, au moins partiellement, voire entièrement, le passage du fluide provenant du réservoir 48 vers le régulateur de débit 49. La vanne de fermeture 53 est notamment une électrovanne.

La vanne de fermeture 53 permet de fermer sélectivement toute connexion fluidique entre le système de distribution de fluide 68 et le dispositif de distribution 17.

Par exemple, la vanne de fermeture 53 peut être configurée pour permettre le passage du fluide provenant du réservoir 48 vers le régulateur de débit 49 lorsque la pression du fluide est supérieure à une valeur seuil, et pour empêcher le passage du fluide provenant du réservoir 48 vers le régulateur de débit 49 lorsque la pression du fluide est inférieure à la valeur seuil. Ainsi, il est garanti que la connexion fluidique entre le système de distribution de fluide 68 et le dispositif de distribution 17 n'est établie que lorsque la pression du fluide est suffisante pour assurer un fonctionnement adéquat du dispositif de distribution 17, et donc une qualité adéquate de la boisson issue de la chambre de mélange 66 - en l'absence de la vanne de fermeture 53, de la boisson pourrait en effet continuer à s'écouler depuis la sortie de distribution du dispositif 17 avec un débit d'eau/chaude ou de vapeur d'eau trop faible pour assurer un traitement optimal dans la partie de traitement et dans la partie de mélange.

En outre, la présence de la vanne de fermeture 53 permet également d'empêcher un écoulement intempestif d'eau vers le port d'amenée d'eau et/ou de vapeur 51 entre plusieurs utilisations successives du dispositif de distribution 17.

Le dispositif de distribution 17 comprend, selon certaines variantes, un moyen de sélection 45 du débit d'air s'écoulant à travers le port d'amenée d'air. Ceci permet à l'utilisateur de changer à volonté la texture de la boisson s'écoulant hors de la partie de mélange du dispositif de distribution 17.

L'utilisation d'un moyen de sélection 45 est permise dans des conditions avantageuses par le dispositif de distribution de fluide 68. En effet, certains dispositifs de l'art antérieur utilisent un circuit de passage d'air du dispositif pour faire passer un fluide de nettoyage. Or, le dispositif proposé ici s'affranchit de cette contrainte grâce au port de nettoyage 61 et au régulateur de débit 49 - il est donc possible de permettre à un utilisateur de modifier le débit d'air à travers le port d'amenée d'air sans risquer d'entraver le passage d'un fluide de nettoyage, puisque le port d'amenée d'air n'est pas utilisé pour faire passer un tel fluide.

Le moyen de sélection 45 peut notamment prendre la forme d'un bouton disposé sur une paroi externe du dispositif de distribution 17, tel qu'un bouton actionnable manuellement. Notamment, le moyen de sélection 45 peut être un bouton de type sélecteur rotatif, permettant de choisir un débit d'air entre un débit minimum correspondant à une première position extrémale du moyen de sélection 45, et un débit maximum correspondant à une deuxième position extrémale du moyen de sélection 45.

Le moyen de sélection 45 est notamment agencé sur une face supérieure du dispositif de distribution de boisson 17.

L'appareil de production de boisson 35 est, selon un mode de réalisation, propre à être mis dans un mode de nettoyage du dispositif de distribution, dans lequel un organe de contrôle du régulateur de débit 49 commande alternativement le régulateur de débit 49 entre sa première et sa deuxième position.

Éventuellement, l'organe de contrôle est configuré pour faire alterner la position du régulateur de débit 49 de manière répétée entre la première position et la deuxième position. Ainsi, un nettoyage est effectué à intervalles réguliers - le régulateur de débit 49

étant alors dans sa deuxième position - entre des phases où l'appareil de production de boisson 35 est prêt à être utilisé pour distribuer une boisson - le régulateur de débit 49 étant alors dans sa première position.

Selon un mode de réalisation, un orifice d'évacuation 24 débouche sur la surface interne 25 du canal d'amenée de liquide 74. L'orifice d'évacuation 24 débouche dans la deuxième portion 55 du canal d'amenée de liquide 74 configurée pour recevoir la conduite d'amenée de liquide 22, de sorte que, lorsque la conduite d'amenée de liquide 22 est insérée dans le port d'amenée de liquide 27, l'orifice d'évacuation 24 est obturé par une surface externe de la conduite d'amenée de liquide 22, et n'interfère pas avec le passage du liquide dans le port d'amenée de liquide 27.

De préférence, l'orifice d'évacuation 24 débouche sur une moitié inférieure de la surface interne 25 dans une position normale d'utilisation du dispositif de distribution 17, de sorte à faciliter l'engouffrement du liquide dans l'orifice d'évacuation 24 sous l'effet de la gravité.

En revanche, lorsque la conduite d'amenée de liquide 22 n'est pas logée dans le port d'amenée de liquide 27, l'orifice d'évacuation 24 est libre. Lorsqu'un liquide circule dans le canal d'amenée de liquide selon un sens opposé au sens normal d'écoulement du liquide dans le canal d'amenée de liquide, l'orifice d'évacuation 24 permet que ce liquide soit évacué du canal d'amenée de liquide avant d'arriver jusqu'au port d'amenée de liquide 27. En effet, en l'absence de l'orifice d'évacuation 24, un tel liquide serait susceptible de s'écouler en dehors du port d'amenée de liquide 27 et de se répandre soit sur un plan de travail sur lequel est disposé l'appareil de distribution 35, soit sur des mains d'un utilisateur.

Notamment, un tel écoulement de liquide selon un sens opposé au sens de circulation normal dans le canal d'amenée de liquide se produit lors d'un nettoyage du canal d'amenée de liquide effectué au moyen d'eau et/ou de vapeur acheminée dans le canal d'amenée de liquide via le port de nettoyage 61.

L'orifice d'évacuation 24 est agencé de sorte à permettre l'évacuation de liquide s'écoulant dans le canal d'amenée de liquide 74 vers une buse d'évacuation. L'orifice d'évacuation 24 est ainsi fluidiquement relié à la buse d'évacuation. Par « fluidiquement relié », on entend toute liaison permettant d'acheminer le liquide depuis l'entrée de l'orifice d'évacuation 24 jusqu'à la buse d'évacuation. Notamment, une telle liaison fluidique comprend une liaison par une conduite continue, mais également une liaison discontinue, c'est-à-dire que la liaison fluidique peut être assurée par un ensemble constitué d'une conduite apte à être alimentée par l'orifice d'évacuation 24 et d'un canal de réception 21 débouchant au droit de la conduite et alimentant la buse d'évacuation, le canal de réception 21 n'étant pas continu avec la conduite.

Lors d'un nettoyage du canal d'amenée de liquide grâce au port de nettoyage 61, il peut être avantageux de placer l'extrémité de la conduite d'amenée de liquide 22 qui n'est pas reliée au port d'amenée de liquide 27 - l'autre extrémité restant raccordée au port d'amenée de liquide 27 - dans un récipient vide, de sorte à permettre l'évacuation du fluide de nettoyage en dehors du port d'amenée de liquide 27. À cet effet, l'appareil de production d'une boisson 35 peut comprendre un plateau d'accueil du récipient prévu pour accueillir la boisson produite, le plateau d'accueil comprenant une portion d'accueil de liquide formant un tel récipient vide destiné à l'accueil de fluide de nettoyage.

### Couvercle articulé

Le dispositif de distribution de boisson 17 est muni d'un couvercle 56, articulé au moyen d'une charnière 59 par rapport au corps principal 62.

Le couvercle est configuré pour pouvoir adopter une position dite « d'obturation », dans laquelle il est au contact de la face principale 60, et empêche donc tout accès au conduit principal d'écoulement, et donc à la chambre de traitement 16, ainsi qu'à la chambre de mélange 66.

Le couvercle 56 est également configuré pour pouvoir adopter une position dite « d'ouverture », illustrée notamment sur la figure 2b, dans laquelle il se trouve à l'écart de la face principale 60 et permet un accès au conduit principal d'écoulement, et donc à la chambre de traitement 16, ainsi qu'à la chambre de mélange 66.

Préférentiellement, la charnière 59 permet un écartement du couvercle 56 par rapport à la face principale 60 pouvant aller jusqu'à environ 180°, de sorte à permettre un accès aisé aux différents canaux accessibles depuis la face principale 60 à des doigts d'un utilisateur, par exemple pour un nettoyage manuel de la face principale 60.

De sorte à empêcher, en position d'obturation du couvercle 56, un débordement de liquide, d'eau chaude ou de vapeur hors du dispositif de distribution 17, un joint d'étanchéité 57 entoure au moins certaines ouvertures disposées dans la face principale 60. Le joint d'étanchéité 57 est porté soit par le couvercle 56, soit par la face principale 60.

Notamment, la chambre de mélange 66 et le conduit d'écoulement principal peuvent tous deux êtres ouverts sur la face principale 60, une ouverture 63 de la chambre de mélange 66 sur la face principale 60 communicant directement avec la chambre de traitement 16 - elle aussi ouverte sur la face principale 60 - par l'intermédiaire du canal de sortie 69 de la chambre de traitement 16. Le joint d'étanchéité 57 peut dans ce cas entourer l'ensemble formé par l'ouverture du conduit d'écoulement principal (dont l'ouverture de la chambre de traitement 16) et l'ouverture 63 de la chambre de mélange 66.

Un élément de rappel est prévu dans le dispositif de distribution 17, et est configuré pour rappeler, en l'absence d'une sollicitation extérieure, le couvercle 56 vers sa position d'ouverture. De cette façon, lors d'un retrait du dispositif de distribution 17 de la tête de distribution en vue notamment du nettoyage du dispositif de distribution 17 et de préférence d'une mise au lave-vaisselle du dispositif de distribution 17 (ou uniquement de son corps principal 62), le couvercle 56 reste à l'écart de la face principale 60 et n'empêche pas un nettoyage optimal des ouvertures présentes dans celle-ci. En particulier lorsque le dispositif de distribution 17 a préalablement été utilisé pour une préparation à base de lait, un tel nettoyage permet d'éliminer le lait séché dans les différents canaux et conduits du dispositif de distribution 17. On conserve ainsi de meilleures performances du dispositif de distribution 17 dans le temps.

Selon certains modes de réalisation, l'élément de rappel prend la forme d'un ressort.

Il peut notamment s'agir d'un ressort de compression solidarisé à l'un ou l'autre de la face principale 60 et du couvercle 56, et prenant appui sur l'autre de la face principale 60 ou du couvercle 56 lors d'un passage du couvercle 56 vers sa position d'obturation.

L'élément de rappel peut alternativement être un ressort de torsion dont l'axe principal est un axe principal de la charnière 59.

L'élément de rappel peut également être une lamelle en plastique s'inscrivant, dans une position de repos de la lamelle, dans un plan sécant avec la face principale 60.

L'élément de rappel peut également être une bille ressort.

Selon certains modes de réalisation, et comme présenté sur la figure 2b, l'élément de rappel est formé par une portion de rappel 58 du joint d'étanchéité 57. Notamment, une extrémité du joint d'étanchéité 57 forme la portion de rappel 58. Lors d'une fabrication du joint d'étanchéité 57, la portion de rappel 58 est formée, notamment moulée lorsque le joint d'étanchéité 57 est formé dans un matériau élastomérique, de sorte que la portion de rappel 58 s'étende, dans sa position de repos, à l'écart d'un plan dans lequel s'inscrit le reste du joint d'étanchéité 57. De cette façon, lorsque le joint d'étanchéité 57 est disposé dans une rainure prévue à cet effet dans le couvercle 56 ou dans la face principale 60, le joint d'étanchéité se trouve en saillie du couvercle 56 ou de la face principale 60.

Ainsi, en l'absence d'une sollicitation extérieure, la portion de rappel 58 tend à reprendre la forme dans laquelle elle a été formée, notamment moulée, et à rappeler le couvercle 56 dans sa position d'ouverture.

L'utilisation d'une portion de rappel 58 du joint d'étanchéité 57 pour former l'élément de rappel permet avantageusement de s'affranchir de la nécessité d'un élément de rappel distinct du joint d'étanchéité 57. Ceci réduit le coût de fabrication du dispositif de distribution 17. Ceci réduit également la complexité du dispositif de distribution 17, et donc sa fragilité.

Préférentiellement, dans la position d'ouverture du couvercle 56, la portion de rappel 58 se trouve en saillie verticale, dans la position normale d'utilisation du dispositif de distribution 17, par rapport à la face principale 60 ou au couvercle 56.

Préférentiellement, lorsque le joint d'étanchéité 57 est logé dans la face principale 60, la portion de rappel 58 est, dans la position d'obturation du couvercle 56, affleurante avec la face principale 60 et/ou avec le reste du joint d'étanchéité 57.

Lorsque le joint d'étanchéité 57 est logé dans la face principale 60, le joint d'étanchéité 57 comprend, selon certains modes de réalisation, une portion entourant au moins partiellement l'ouverture 63 de la chambre de mélange 66. Dans ce cas, la portion de rappel 58 s'étend éventuellement depuis ladite portion du joint d'étanchéité 57.

Notamment, la portion de rappel 58 s'étend sensiblement parallèlement à une direction principale de la chambre de traitement 16.

La portion de rappel 58 est par exemple située à proximité de la charnière 59, notamment plus proche de la charnière 59 que la chambre de traitement 16. Ceci permet un angle d'ouverture du couvercle 56 plus important, dans la position d'ouverture, que pour une portion de rappel 58 disposée plus loin de la charnière 59 - notamment à une distance de la charnière 59 plus importante qu'une distance entre la charnière 59 et la chambre de traitement 16.

La face principale 60 ou le couvercle 56 comprend, selon certains modes de réalisation, un logement de réception 64 de l'élément de rappel, permettant de recevoir intégralement l'élément de rappel lorsque le couvercle 56 se trouve dans sa position d'obturation. Le logement de réception 64 garantit ainsi que le couvercle 56 puisse venir au contact de la face principale 60 dans sa position d'obturation, sans blocage par l'élément de rappel.

Lorsque l'élément de rappel est formé par la portion de rappel 68 du joint d'étanchéité 57, le logement de réception 64 est prévu pour accueillir la portion de rappel 68.

Le logement de réception 64 présente une épaisseur - définie ici comme une dimension perpendiculairement à la face principale 60 (ou, lorsque le joint d'étanchéité 57 est logé dans le couvercle, perpendiculairement au couvercle 56) supérieure à une épaisseur de la rainure dans laquelle est logé le reste du joint d'étanchéité 57.

Selon certains modes de réalisation, le couplage du dispositif de distribution 17 à la tête de distribution 37 est effectué par une insertion du dispositif de distribution 17 dans un rail 65 de la tête de distribution 37. Le rail 65 est configuré pour ne permettre l'insertion du dispositif de distribution 17 dans le rail 65 que lorsque le couvercle 56 se trouve dans sa position d'obturation.

Le rail 65 peut définir une position extrémale d'insertion du dispositif de distribution 17 dans la tête de distribution 37, dans laquelle il est impossible d'insérer davantage le dispositif de distribution 17 dans la tête de distribution 37.

Notamment, le rail 65 comprend une surface de glissement 75 configurée pour être disposée, dans la position normale d'utilisation de l'appareil de production de boisson 35, en dessous d'un épaulement 76 du corps principal 62. Le rail 65 comprend en outre une surface de retenue 77 configurée pour empêcher un passage du couvercle 56 vers sa position d'ouverture lorsque le dispositif de distribution 17 est inséré dans le rail 65.

Le rail 65 permet d'empêcher une ouverture du couvercle 56 lorsque le dispositif de distribution 17 est inséré dans la tête de distribution 37.

De préférence, la tête de distribution 37 comprend deux rails 65 configurés pour recevoir deux faces latérales distinctes du corps principal 62.

Selon certains modes de réalisation, la tête de distribution comprend un levier articulé susceptible de maintenir le dispositif de distribution 17 dans sa position extrémale d'insertion dans la tête de distribution 37. Le levier articulé permet d'assurer un maintien du dispositif de distribution 17 en coopération avec les rails 65.

Dans le mode de réalisation décrit, le port de nettoyage 61 est un port dédié au nettoyage du dispositif de distribution de boisson 17 avec de l'eau et/ou de la vapeur. Le port de nettoyage 61 est dépourvu d'autre fonction et notamment d'une fonction d'alimentation en air du liquide et/ou du dispositif de distribution de boisson.

Dans le mode de réalisation décrit, le corps principal 62 du dispositif de distribution de boisson 17 forme un ensemble propre à être saisi d'un seul tenant par un utilisateur et intègre le port de nettoyage 61, le port d'amenée de liquide 27, le port d'amenée d'air et le port d'amenée d'eau et/ou de vapeur 51, ainsi que la partie de mélange.

Avantageusement, le port de nettoyage 61, le port d'amenée de liquide 27 et le canal d'amenée de liquide 74 sont configurés pour que de l'eau de nettoyage alimentant le port de nettoyage 61 circule via le canal d'amenée de liquide 74 d'une part vers la partie de mélange et de préférence jusqu'à la partie de mélange, et d'autre part vers la conduite d'amenée de liquide 22 et de préférence au travers de la conduite d'amenée de liquide lorsque celle-ci est couplée au port d'amenée de liquide 74. En d'autres termes l'agencement relatif du port de nettoyage 61, du port d'amenée de liquide 27 et du canal d'amenée de liquide 74 est tel que de l'eau de nettoyage alimentant le port de nettoyage 61 circule à la fois, d'un côté, jusqu'à la partie de mélange et, de l'autre côté, au travers de la conduite d'amenée de liquide 22 lorsque celle-ci est couplée au port d'amenée de liquide 27 pour nettoyer la conduite d'amenée de liquide 22, le port d'amenée de liquide 27, le canal d'amenée de liquide 74 et avantageusement au moins partiellement la partie de mélange.

La présente divulgation concerne en outre un procédé de nettoyage du canal d'amenée de liquide 74 au moyen du système de distribution de fluide 68, dans lequel le régulateur de débit 49 est passé de sa première position à sa deuxième position de sorte à permettre l'alimentation du canal d'amenée de liquide 74 avec un fluide provenant du réservoir 68 et acheminé du réservoir 68 au canal d'amenée de liquide 74 via le système de distribution de fluide 68 et le port de nettoyage 61.

## Revendications

1. Appareil de production d'une boisson (35), comprenant :
un dispositif de distribution d'une boisson (17) comprenant :
- un port d'amenée de liquide (27) configuré pour accueillir une conduite d'amenée de liquide (22), le port d'amenée de liquide (27) étant configuré pour alimenter un canal d'amenée de liquide (74),
- un port d'amenée d'air,
- un port d'amenée d'eau et/ou de vapeur (51),
- une partie de mélange, le port d'amenée de liquide (27), le port d'amenée d'air et le port d'amenée d'eau et/ou de vapeur (51) étant fluidiquement reliés à la partie de mélange, et
- un port de nettoyage (61) comprenant une première extrémité débouchant sur une surface interne (25) du canal d'amenée de liquide (74),
un réservoir d'eau (48),
un système de distribution de fluide (68) positionné entre le réservoir d'eau (48) et le dispositif de distribution de boisson (17), le système de distribution de fluide (68) comprenant un régulateur de débit (49) propre à commander l'alimentation en eau et/ou en vapeur du port de nettoyage (61) et du port d'amenée d'eau et/ou de vapeur (51), le régulateur de débit (49) étant configuré pour adopter sélectivement :
- une première position dans laquelle le régulateur de débit (49) empêche le passage de fluide vers le port de nettoyage (61) et permet le passage de fluide vers le port d'amenée d'eau et/ou de vapeur (51), et
- une deuxième position dans laquelle le régulateur de débit (49) empêche le passage de fluide vers le port d'amenée d'eau et/ou de vapeur (51) et permet le passage de fluide dans le port de nettoyage (61).

2. Appareil de production d'une boisson (35) selon la revendication 1, comprenant en outre une vanne de fermeture (53) agencée en amont du régulateur de débit (49) selon un sens normal d'écoulement du fluide dans le système de distribution de fluide (68), la vanne de fermeture (53) étant configurée pour adopter sélectivement une position d'ouverture dans laquelle la vanne de fermeture (53) permet le passage du fluide vers le régulateur de débit (49), ou une position de fermeture dans laquelle la vanne de fermeture (53) empêche le passage du fluide vers le régulateur de débit (49).

3. Appareil de production d'une boisson (35) selon la revendication 2, dans lequel la vanne de fermeture (53) est configurée pour adopter la position de fermeture si une pression du fluide subie par la vanne de fermeture (53) est inférieure à un seuil prédéfini.

4. Appareil de production d'une boisson (35) selon l'une quelconque des revendications 1 à 3, comprenant en outre un moyen de sélection (45) d'un débit d'air à travers le port d'amenée d'air, le moyen de sélection (45) étant positionné sur le dispositif de distribution (17) et étant actionnable manuellement.

5. Appareil de production d'une boisson (35) selon l'une quelconque des revendications précédentes, dans lequel la partie de mélange comprend :
- un conduit d'écoulement principal relié fluidiquement au port d'amenée d'eau et/ou de vapeur (51) et comportant une restriction de section (67), une première portion de conduit (70) du conduit d'écoulement principal étant située en amont de la restriction de section (67) et s'étendant jusqu'à la restriction de section (67), et une deuxième portion de conduit du conduit d'écoulement principal étant située en aval de la restriction de section (67) et s'étendant depuis la restriction de section (67), la deuxième portion de conduit formant une chambre de traitement (16), et
- une chambre de mélange (66) située en aval de la chambre de traitement (16), la chambre de mélange (66) étant munie d'un orifice de sortie de la boisson.

6. Appareil de production d'une boisson (35) selon la revendication précédente, dans lequel la chambre de traitement (16) est une chambre de moussage et la boisson est une boisson moussée.

7. Appareil de production d'une boisson (35) selon l'une quelconque des revendications 5 et 6, dans lequel la partie de mélange comprend :
- un canal d'amenée d'eau /vapeur s'étendant entre le port d'amenée d'eau et/ou de vapeur (51) et la première portion de conduit (70),
- le canal d'amenée de liquide (74) s'étendant entre le port d'amenée de liquide (27) et le conduit d'écoulement principal, et
- un canal d'amenée d'air s'étendant entre le port d'amenée d'air et le conduit d'écoulement principal.

8. Appareil de production d'une boisson (35) selon la revendication précédente, dans lequel le canal d'amenée d'air et le canal d'amenée de liquide (74) débouchent dans le conduit d'écoulement principal au niveau de la restriction de section (67), de préférence directement en aval de la restriction de section (67) au niveau d'une extrémité amont de la deuxième portion de conduit.

9. Appareil de production d'une boisson (35) selon l'une quelconque des revendications précédentes, dans lequel le système de distribution de fluide (68) comprend en amont du régulateur de débit (49) selon un sens normal (S) d'écoulement du liquide depuis le réservoir d'eau (48) :
- une pompe (52), et
- un élément chauffant (50) configuré pour chauffer le fluide.

10. Appareil de production d'une boisson (35) selon l'une quelconque des revendications précédentes, comprenant en outre un port d'amenée de boisson chaude (3) et une buse de distribution de boisson chaude, le port d'amenée de boisson chaude (3) étant relié fluidiquement à la buse de distribution de boisson chaude.

11. Appareil de production d'une boisson (35) selon l'une quelconque des revendications précédentes, dans lequel le système de distribution de fluide (68) comprend un organe de contrôle du régulateur de débit (49), l'organe de contrôle étant propre dans un mode de nettoyage du dispositif de distribution de boisson (17) à commander alternativement et de préférence de manière répétée le régulateur de débit (49) entre la première position et la deuxième position.

12. Appareil de production d'une boisson (35) selon l'une quelconque des revendications précédentes, dans lequel le dispositif de distribution de boisson (17) est agencé de manière amovible dans une tête de distribution de boisson (37) de l'appareil de production de boisson (35), la tête de distribution de boisson (37) comprenant deux sorties d'eau et/ou de vapeur auxquelles le port d'amenée d'eau et/ou de vapeur (51) et le port de nettoyage (61) sont respectivement propres à être connectés, l'appareil de production de boisson (35) comprenant deux canaux de circulation d'eau et/ou de vapeur (71) reliés entre, d'une part, le régulateur de débit (49) et, d'autre part, les sorties d'eau et/ou de vapeur.

13. Appareil de production d'une boisson (35) selon l'une quelconque des revendications précédentes, dans lequel le canal d'amenée de liquide (74) comprend :
- une première portion (54) disposée sensiblement verticalement dans une position d'utilisation de l'appareil de production d'une boisson (35), et
- une deuxième portion (55), disposée sensiblement horizontalement dans une position d'utilisation de l'appareil de production d'une boisson (35) et reliée au port d'amenée de liquide (27), la deuxième portion (55) débouchant sur la première portion (54).

14. Appareil de production d'une boisson (35) selon l'une quelconque des revendications précédentes, dans lequel le port de nettoyage est un port dédié au nettoyage du dispositif de distribution de boisson avec de l'eau et/ou de la vapeur.

15. Procédé de nettoyage d'un canal d'amenée de liquide (74) d'un dispositif de distribution d'une boisson (17) associé à un appareil de production d'une boisson, le dispositif de distribution de boisson (17) comprenant :
- un port d'amenée de liquide (27) configuré pour accueillir une conduite d'amenée de liquide (22), le port d'amenée de liquide (27) étant configuré pour alimenter le canal d'amenée de liquide (74),
- un port d'amenée d'air,
- un port d'amenée d'eau et/ou de vapeur (51), et
- une partie de mélange, le port d'amenée de liquide (27), le port d'amenée d'air et le port d'amenée d'eau et/ou de vapeur (51) étant fluidiquement reliés à la partie de mélange,
- un port de nettoyage (61) comprenant une première extrémité débouchant sur une surface interne (25) du canal d'amenée de liquide (74),
le procédé comprenant des étapes successives de :
a. passage d'un régulateur de débit (49) d'un système de distribution de fluide (68) de l'appareil de production de boisson d'une première position dans laquelle le régulateur de débit (49) empêche le passage de fluide vers le port de nettoyage (61) et permet le passage de fluide vers le port d' amenée d'eau et/ou de vapeur (51) à une deuxième position dans laquelle le régulateur de débit (49) empêche le passage de fluide vers le port d'amenée d'eau et/ou de vapeur (51) et permet le passage de fluide dans le port de nettoyage (61), et
b. passage d'un fluide provenant d'un réservoir d'eau (48) à travers le système de distribution de fluide (68) et à travers le port de nettoyage (61) du dispositif de distribution de boisson (17).
